# EUROPEAN PATENT SPECIFICATION

(11) **EP 0 409 640 B1**
(45) Date of publication and mention of the grant of the patent: **27.09.1995**
(21) Application number: 90307943.2
(22) Date of filing: 20.07.1990
(51) Int. Cl.: H01R 23/72, H01R 13/24

(54) **Connector assembly for electronic devices**
Verbinder-Anordnung für elektronische Vorrichtungen
Assemblage de connecteur pour dispositifs électroniques

(30) Priority: 21.07.1989 JP 85859/89; 27.07.1989 JP 88778/89
(43) Date of publication of application: 23.01.1991
(73) Proprietor: NEC CORPORATION, Tokyo (JP)
(72) Inventor: Kobayashi, Fumiyuki, Minato-ku, Tokyo (JP)
(74) Representative: Orchard, Oliver John

(56) References cited:
- EP-A- 0 188 046
- EP-A- 0 256 541
- DE-A- 2 246 539
- DE-A- 2 619 677
- FR-A- 2 478 864

## Description

The present invention relates to a connector assembly for electronic devices and, more particularly, to a connector assembly having a spring connector as a means to interconnect printed circuit boards or to connect a power supply terminal with a printed circuit board.

With a conventional connector assembly of the kind to which the present invention relates, it is general that two printed circuit boards are connected with each other by means of a plug and socket connector or by means of wires. Where the plug and the socket are used, a problem encountered is that they may not fit together well unless the two printed circuit boards to which the plug and the socket are respectively fixed are precisely and accurately located. Where wires are used, the assemblage and the maintenance of the assembly are not easy especially because of the need of soldering both the ends of the wires in the fabrication of the assembly.

It is, therefore, an object of the invention to overcome the problems existing in the conventional arrangements and to provide an improved connector assembly for the interconnection between printed circuit boards or for the connection of a power supply terminal with a circuit board.

Another object of the invention is to provide an arrangement wherein the electrical contact between the elements concerned can be easily and stably established and assembly can be fabricated and maintained in a simpler manner.

Still another object of the invention is to provide a power supply connector assembly adapted to be used in an electronic device in which, when a pack holding section holds a battery pack, a power supply terminal of the battery pack is easily and stably connected to a power supply pattern terminal of a circuit board.

In the specification of German patent number 2,246,539, which was published on April 12 1973, and in corresponding British patent specification number, 1,410,779, there was proposed an electrical connector arrangement for a housing with two sides to which two sets of electrically conducting paths are connected.

In an arrangement to be described below there is a connector assembly adapted to be incorporated in an electronic device having a printed circuit board, a battery pack holding section defined by a wall of a housing case for holding a battery pack, the connector assembly comprising a contact pattern provided on the printed circuit board, and a spring connector having a spring contact of a leaf spring type movable by the spring force for being in contact with contact pattern on the printed circuit board, the spring connector including a terminal pin having a head electrically connectable to the battery pack, a coil spring carried by the terminal pin, a terminal leaf spring having a bent extended portion forming the spring contact and having a base portion engaging with the terminal pin, and a mounting rib standing up from the housing case, each of the wall, the terminal leaf spring and the mounting rib having a whole through which the terminal pin extends and the mounting rib holding the terminal leaf spring with the coil spring pressing the terminal leaf spring against the mounting rib, whereby the spring contact formed at the extended portion of the terminal leaf spring is in constant electric contact with the contact pattern on the printed circuit board.

There will further be described below an electronic device having a case including a battery pack holding section defined by a wall at a rear of said case for holding a battery pack, a printed circuit board carrying on its back surface a contact pattern, and a spring connector for establishing electric contact with said contact pattern, characterised in that said spring connector comprises a spring contact which is movable by the spring connector to be in contact with said contact pattern, a terminal pin having a head electrically connectable to said battery pack, a coil spring carried by said terminal pin, a terminal leaf spring having a bent extended portion forming a spring contact and having a base portion engaging with said terminal pin, and a mounting rib standing up from said housing case, each of said wall, said terminal leaf spring and said mounting rib having a hole through which said terminal pin extends and said mounting rib holding said terminal leaf spring with said coil spring pressing said terminal leaf spring against said mounting rib, whereby the spring contact formed at the extended portion of said leaf spring is in constant electric contact with the contact pattern on the back surface of said printed circuit board.

The following description and drawings disclose arrangements known to the inventor from which the present invention developed, conventional arrangements, and by means of examples, the invention which is characterised in the appended claims, whose terms determine the scope of protection conferred hereby. In the drawings:-
Fig. 1a is a sectional view showing a proposal known to the inventor for a connector assembly which is not within the scope of the present invention, but from which the present invention developed,
Fig. 1b is an enlarged sectional view of the portion A of Fig. 1a;
Fig. 2a is a sectional view showing a connector assembly according to the present invention;
Fig. 2b is an enlarged sectional view of the portion B of Fig. 2a;
Fig. 3 is a perspective view showing the ways in which the connector assembly as shown in Figs. 2a, 2b is assembled when incorporated in an electronic device;
Figs. 4a, 4b and 4c are perspective views of a disassembled telephone device in which the connector assemblies shown in Figs. 1a, 1b and Figs. 2a, 2b are both incorporated, Fig. 4a illustrating a front cover of the device shown downside up;
Fig. 5 is a sectional view showing a conventional connector assembly using a plug and socket connector;
Fig. 6 is a sectional view showing a conventional connector assembly using a wire connection; and
Fig. 7 is a sectional view showing a conventional connector assembly using also a wire connection.

Throughout the following explanation, similar reference symbols or numerals refer to the same or similar elements in all the figures of the drawings.

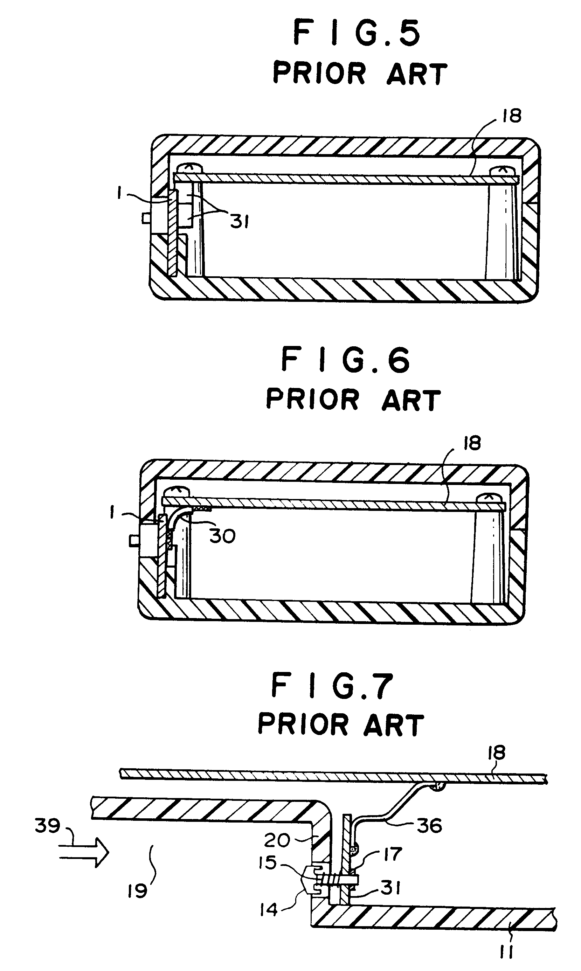

For the purpose of assisting in the understanding of the present invention, a conventional connector assembly for printed circuit boards and the problems existing thereit will be described by making reference to Figs. 5, 6 and 7.

Fig. 5 shows a conventional connector assembly in which printed circuit boards 1, 18 are electrically connected with each other by a plug and socket connector 31. Since the plug and the socket are fixed on the respective printed circuit boards 1, 18, the relative locations of the two printed circuit boards must be accurately fixed for the plug and the socket to fit together. In order to arrange that they do fit even when the relative locations of the two boards are not accurately made, some conventional assemblies have incorporated therein a connector which incorporates therein a certain floating mechanism but a disadvantage in such connector is that its manufacturing cost is high.

Fig. 6 shows another conventional connector assembly in which a wire 30 is used for connecting the printed circuit boards 1, 18 together. In this arrangement, the use of solder is required for connecting each of the two ends of the wire onto each of the printed circuit boards and this involves the complication in the assembling and disassembling and also in the handling of the wire itself.

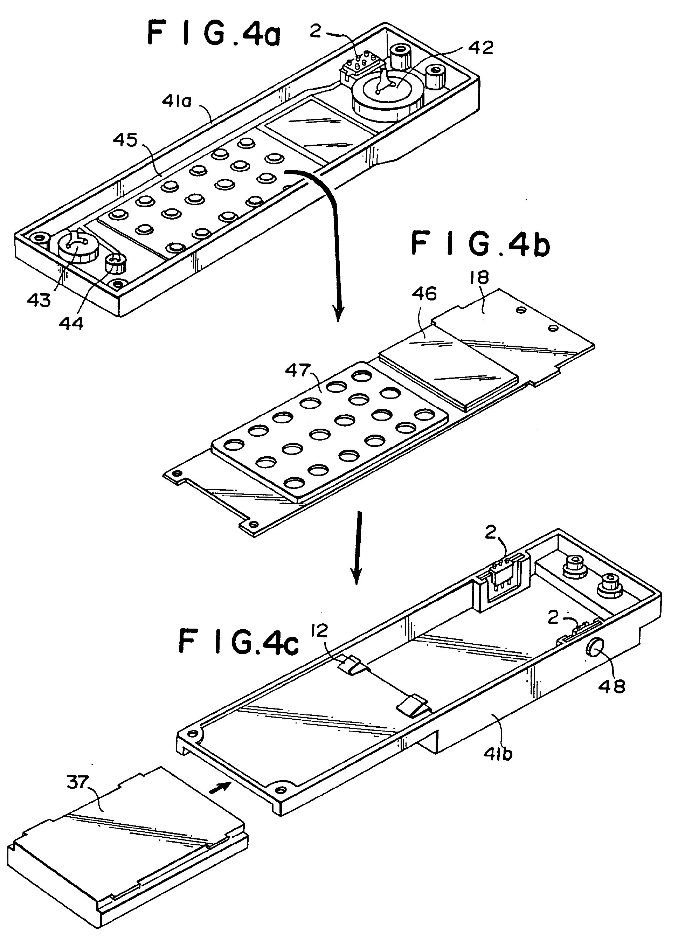

Fig. 7 shows still another conventional connector assembly which is incorporated in a portable wireless device comprising a housing case 11 and a battery pack holding section 19 provided in the housing case 11. The battery pack holding section 19 holds a battery pack 37 (shown in Fig. 4c) which is inserted therein in the direction shown in an arrow 39. The battery pack 37 has a pair of power supply terminals which are compressed against a pair of terminal pins 14 which constitute power connecting terminals. It is to be noted that, where there are any members in a pair such as the case with these terminal pins 14, only one of such members is shown in the drawings. The housing case 11 carries therein a sub-circuit plate 31 having a hole for receiving therein the terminal pin 14 with an E-ring 17 being affixed at one end of the terminal pin 14. The terminal pin 14 carries a coil spring 15 so that, when the head of the terminal pin 14 is pressed by the power supply terminal of the battery pack 37, the terminal pin 14 moves against the spring force of the coil spring 15. The terminal pin 14 is electrically connected and conductive to the sub-circuit plate 31 and this plate 31 and a main base circuit plate 18 carrying various circuitry are electrically connected with each other by a wire 36. Solder is used for affixing both the ends of the wire 36 and this involves complicated internal arrangements and also involves complicated work in the fabrication and maintenance of the assembly.

In order to overcome the problems existed in the conventional arrangement, the present invention provides a connector assembly which is adapted to be incorporated in an electronic device and which includes a spring connector having a spring contact of a plunger type or of a spring leaf type. The spring leaf type connector has a leaf spring which forms at its extended bent portion the spring contact and which bent portion is movable due to the spring force so that the tip of the bent extended portion is electrically in contact with the contact pattern on the printed circuit board stably and constantly. The spring leaf type connector includes, in addition to the leaf spring, a terminal pin, a coil spring and a mounting rib. The mounting rib holds the leaf spring with the coil spring pressing the leaf spring against the mounting rib. The connector assembly may suitably be incorporated in an electronic device equipped with a printed circuit board or a power supply terminal.

Now the development of the present invention will be better understood from the following description with reference to the drawings mentioned.

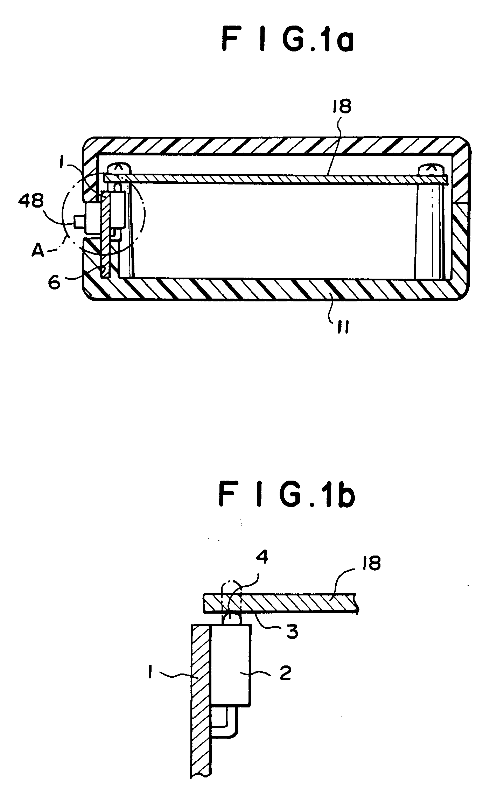

In the arrangement shown in Figs. 1a and 1b, a spring connector 2 is fixed to a printed circuit board 1 and the former and the latter are electrically in contact with each other. A pin 4 forms a spring contact of a plunger type and is slidably movable due to the spring force of a spring disposed in the spring connector 2. The undersurface of the printed circuit board 18 carries a contact pattern 3 at the position where the pin 4 faces. The numeral 48 represents a mute button the location of which is more clearly seen in Fig. 4c.

In this arrangement, the printed circuit board 1 is received in a groove 6 provided inside a case 11 and the printed circuit board 18 is fixed to the case 11 from above by such means as screws. In this state, the pin 4 of the spring connector 2 fixed on the printed circuit board 1 is pressed against the contact pattern 3 on the printed circuit board 18 due to the spring force. Therefore, the printed circuit board 1 and the printed circuit board 18 are electrically conductive.

Although the foregoing explanation refers only to an arrangement wherein the spring connector 2 is provided only on one printed circuit board 1, it is of course possible to use two or more such printed circuit boards with corresponding contact patterns being provided on the printed circuit board 18 and in this way it is possible to establish a number of connections for different purposes.

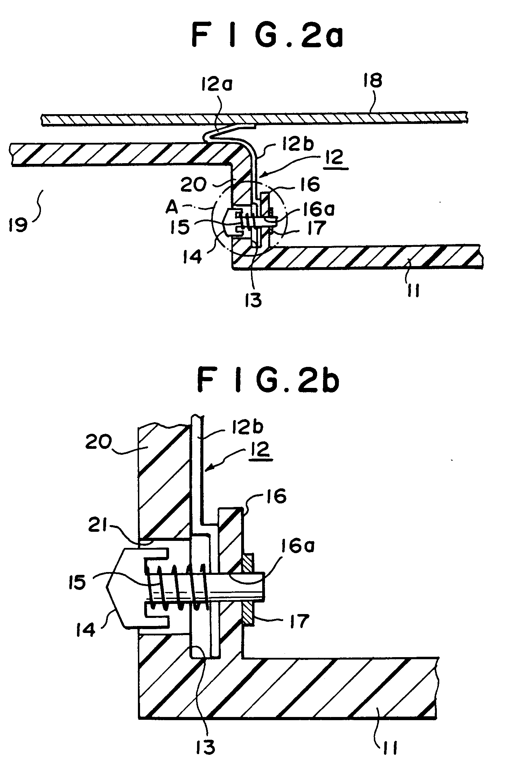

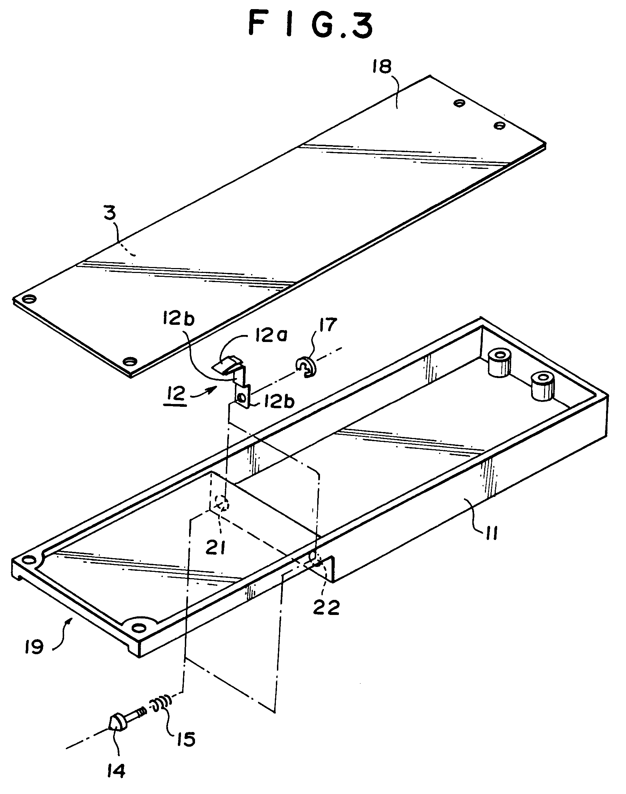

Figs. 2a and 2b show a power supply connector assembly which is an embodiment according to the present invention and which bears a relation to the conventional device shown in and explained with reference to Fig. 7. Generally it is to be understood that the drawings only show only one of the members (or parts) where such members are in a pair. For example, only a hole 21 is seen in Fig. 2a but there are a pair of holes 21, 22 as seen in Fig. 3.

The connector assembly shown in Figs. 2a and 2b is adapted to be incorporated in an electronic device having a battery pack holding section 19 defined by a wall of a housing case 11 for holding a battery pack 37. There is a printed circuit board 18 which carries at its undersurface a contact pattern 3. The spring connector 12 includes a terminal pin 14 having a head electrically connectable to the battery pack 37 (see Figs. 3 and 4c), a coil spring 15 carried by the terminal pin 14, a terminal leaf spring 12b having a bent extended portion forming a spring contact 12a and having a base portion engaging with said terminal pin 14, and a mounting rib 16 standing up from the housing case 11. Each of the wall 20, the terminal leaf spring 12b and the mounting rib 16 has a hole through which the terminal pin 14 extends and the mounting rib 16 holds the terminal leaf spring 12b with the coil spring 15 pressing the terminal leaf spring 12b against the mounting rib 16. Thus, the spring contact 12a formed at the tip of the extended bent portion of the terminal leaf spring 12b is in constant electric contact with the contact pattern 3 on the printed circuit board 18.

The spring connector 12 includes an E-ring 17 which engages with the terminal pin 14 at its end portion projecting out from the mounting rib 16. This E-ring 17 serves as a stopper and the terminal pin 14 and the terminal leaf spring 12b are held to the mounting rib 16. The housing case 11 includes a groove 13 defined between the wall and the mounting rib 16 for receiving the terminal leaf spring 12b in position. The terminal leaf spring 12b directly rests on the inner surface of the wall of the case 11.

The terminal pin 14 and the coil spring 15 in the arrangement according to this embodiment correspond to and similarly arranged as the terminal pin 14 and the coil spring 15 in the conventional arrangement shown in Fig. 6. However, the terminal leaf spring 12b in this embodiment replaces the sub-circuit plate 31 and the wire 36 shown in the conventional arrangement of Fig. 6. The extended portion 12a of the leaf spring 12b is bent in a V-shape for forming the spring contact.

Fig. 3 shows how the power supply connector assembly having the configuration explained with reference to Fig. 2a is assembled when used in an electronic device.

The electronic device exemplified herein comprises a housing 11 which has a battery pack holding section 19 for holding a battery pack 37 and a printed circuit board 18 which is pressed against and fixed by appropriate means such as screws to the housing case 11. The printed circuit board 18 has, on its back surface, printed circuits or contact patterns and carries, on its front side, such means as a liquid crystal display and a keyboard (see Fig. 4b). Spring connector 12 stands upward from the housing case 11. The contact patterns or pattern terminals on the printed circuit board 18 are in contact with the spring contacts 12a of the spring connector 12 with the extended bent portion of the terminal leaf spring 12b being pressed against the pattern terminals on the printed circuit board 18. The constant compression is due to the spring force of the terminal leaf spring 12b and this ensures stable and constant electrical contact between the printed circuit board 18 and the terminal leaf spring 12b and, in turn, between the terminal pin 14 and the printed circuit board 18.

According to this second embodiment, the power supply connection terminal for connecting the battery pack 37 to the printed circuit board 18 in a device such as a portable wireless telephone device includes the terminal pin 14, the coil spring 15 and the terminal leaf spring 12b with the arrangement wherein the extended bent portion of the terminal leaf 12b spring forming the spring contact 12a is directly in press-contact against the contact pattern on the printed circuit board 18. The corresponding conventional connector assembly configuration described requires the sub-base plate 31 for the power supply terminal, and the sub-base plate 31 and the main circuit plate 18 are connected with each other by the wire 36. The connector assembly according to this embodiment is simpler as it does not require such members as the sub-base plate 31 and the wire 36. With this configuration, the connection with printed circuit board 18 can be easily established and the assembly can be fabricated and maintained in a simpler manner than in the corresponding conventional assembly as shown in Fig. 7.

Figs. 4a, 4b and 4c show an example wherein the power supply connector assembly as shown in Figs. 1a, 1b and that shown in Figs. 2a, 2b are incorporated in a wireless telephone device. Fig. 4a illustrates a front cover 41a of the telephone device, shown downside up, which includes spring connectors 2, an earpiece 42, a speaker 43 and a mouthpiece microphone 44. The front cover 41a also includes a flexible printed circuit board 45 which is in contact with the spring connector 2. Fig. 4b shows a printed circuit board 18 which includes the necessary number of contact patterns for connections with the related spring connectors and other circuit-related parts such as a liquid crystal display 46 and a keyboard 47. Fig. 4c shows a rear case 41b (which corresponds to the housing case 11 in Figs. 2a and 3), from which it is seen that the device incorporates therein both the types of spring connectors, one being the plunger type spring connectors 2 and the other being the leaf spring type spring connector 12. The plunger type spring connectors 2 in the front cover 41a and those in the rear case 41b sandwich the printed circuit board 18 and establish electric contacts with the front and the rear surfaces of the circuit board 18 while the leaf spring type spring connector 12 establishes electric connection from the battery pack 37 to the printed circuit board 18.

While the invention has been described in its preferred embodiments, it is to be understood that the words which have been used are words of description rather than limitation and that changes within the purview of the appended claims may be made without departing from the true scope of the invention in its broader aspect.

## Claims

1. A connector assembly adapted to be incorporated in an electronic device having a printed circuit board, a battery pack holding section (19), a contact pattern (3) provided on said printed circuit board (18), a connector (12) having a contact (12a) for being in contact with said contact pattern (3) on said printed circuit board (18), said connector (12) including a terminal pin (14) having a head electrically connectable to said battery pack (37), a coil spring (15) carried by said terminal pin (14), and a mounting rib (16) standing up from said housing case (11) and holding said connector (12), each of said wall (20) and said mounting rib (16) having a hole through which said terminal pin (14) extends, the contact (12a) being in constant electric contact with the contact pattern (3) on said printed circuit board (18), characterised in that said battery pack holding section (19) is defined by a wall of a housing case (11) for holding a battery pack (37), said connector is a spring connector (12) having a spring contact (12a) of a leaf spring type movable by spring force, said spring connector (12) includes a terminal leaf spring (12b) having a bent extended portion forming the spring contact (12a) and having a base portion engaging with said terminal pin (14), said terminal leaf spring (12b) is held by said mounting rib (16) with said coil spring (15) pressing said terminal leaf spring (12b) against said mounting rib (16).

2. A connector assembly according to claim 1, which is characterized in that said terminal leaf spring (12b) directly rests on the inner surface of said wall and said terminal leaf spring (12b) is in a V-shape at its extended portion forming the spring contact (12a).

3. An electronic device having a case including a battery pack holding section (19) defined by a wall at a rear of said case (41b) for holding a battery pack (37), a printed circuit board (18) carrying on its back surface a contact pattern (3), and a spring connector (12) for establishing electric contact with said contact pattern (18), characterised in that it includes a connector assembly according to claim 1 or claim 2, whereby the spring contact (12a) formed at the extended portion of said leaf spring (12b) is in constant electric contact with the contact pattern (3) on the back surface of said printed circuit board (18).

4. An electronic device according to claim 3, which is characterised in that said case (41b) also carries a spring connector (2) having a plunger type spring contact (4) for establishing electric contact with said contact pattern (3) on the printed circuit board (18), said spring contact (4) being slidably movable by the spring force for being in contact with said contact pattern (3) on the printed circuit board (18).

## Patentansprüche

1. Verbinder-Anordnung, die in eine elektronische Vorrichtung mit einer gedruckten Schaltungsplatine, einem Batteriepackhalteabschnitt (19), einem auf der gedruckten Schaltungsplatine (18) vorgesehenen Kontaktmuster (3), einem Verbinder (12) mit einem Kontakt (12a), um mit dem Kontaktmuster (3) auf der gedruckten Schaltungsplatine (18) in Kontakt zu stehen, einbaubar ist, wobei der Verbinder (12) einen Anschlußstift (14) mit einem Kopf, der mit dem Batteriepack (37) elektrisch verbindbar ist, eine von dem Anschlußstift (14) getragene Schraubenfeder (15) und eine Befestigungsrippe (16) aufweist, die von dem Gehäusekasten (11) absteht und den Verbinder (12) hält, wobei sowohl die Wand (20) als auch die Befestigungsrippe (16) eine Bohrung besitzen, durch die sich der Anschlußstift (14) erstreckt, und der Kontakt (12a) dauernd in elektrischem Kontakt mit dem Kontaktmuster (3) auf der gedruckten Schaltungsplatine (18) steht, dadurch gekennzeichnet, daß der Batteriepackhalteabschnitt (19) zum Halten eines Batteriepacks (37) durch eine Wand eines Gehäusekastens (11) bestimmt wird, der Verbinder ein Federverbinder (12) mit einem blattfederartigen Federkontakt (12a) ist, der durch die Federkraft bewegbar ist, wobei der Federverbinder (12) eine Anschlußblattfeder (12b) mit einem gebogenen verlängerten Abschnitt, der den Federkontakt (12a) bildet, und mit einem Basisabschnitt aufweist, der mit dem Anschlußstift (14) in Eingriff kommt, und die Anschlußblattfeder (12b) durch die Befestigungsrippe (16) gehalten wird, wobei die Schraubenfeder (15) die Anschlußblattfeder (12b) gegen die Befestigungsrippe (16) drückt.

2. Verbinder-Anordnung gemäß Anspruch 1, die dadurch gekennzeichnet ist, daß die Anschlußblattfeder (12b) direkt auf der Innenfläche der Wand verbleibt und die Anschlußblattfeder (12b) eine V-Form besitzt, wobei ihr verlängerter Abschnitt den Federkontakt (12a) bildet.

3. Elektronische Vorrichtung mit einem Gehäuse, das einen durch eine Wand an einer Rückseite des Kastens (41b) bestimmten Batteriepackhalteabschnitt (19) zum Halten eines Batteriepacks (37), eine auf ihrer Rückseite ein Kontaktmuster (3) tragende gedruckte Schaltungsplatine (18) und einen Federverbinder (12) zum Herstellen eines elektrischen Kontakts mit dem Kontaktmuster (3) aufweist, dadurch gekennzeichnet, daß sie eine Verbinder-Anordnung gemäß Anspruch 1 oder Anspruch 2 aufweist, wobei der an dem verlängerten Abschnitt der Blattfeder (12b) ausgebildete Federkontakt (12a) dauernd in elektrischem Kontakt mit dem Kontaktmuster (3) auf der Rückseite der gedruckten Schaltungsplatine (18) steht.

4. Elektronische Vorrichtung nach Anspruch 3, die dadurch gekennzeichnet ist, daß der Kasten (41b) ebenfalls einen Federverbinder (2) mit einem stempelartigen Federkontakt (4) zum Herstellen eines elektrischen Kontakts mit dem Kontaktmuster (3) auf der gedruckten Schaltungsplatine (18) trägt, wobei der Federkontakt (4) durch die Federkraft verschiebbar bewegbar ist, um mit dem Kontaktmuster (3) auf der gedruckten Schaltungsplatine (18) in Kontakt zu stehen.

## Revendications

1. Assemblage de connecteur adapté pour être incorporé dans un appareil électronique ayant une carte de circuits imprimés, un compartiment de maintien d'un bloc batterie d'alimentation (19), un bornier de contact (3) placé sur la dite carte de circuits imprimés (18), un connecteur (12) possédant un contact (12a) destiné à être en contact le dit bornier de contact (3) placé sur la dite carte de circuits imprimés (18), le dit connecteur (12) comportant une borne mâle (14) possédant une tête susceptible d'être connectée au dit bloc batterie d'alimentation (37), un ressort spiral (15) porté par la dite borne mâle (14), et une nervure de montage (16) se dressant à l'intérieur du dit boîtier (11) et portant le dit connecteur (12), chacune de la paroi (20) et de la nervure de montage (16) présentant un trou traversant au travers duquel passe la borne mâle (14), le contact (12a) étant en contact électrique permanent avec le bornier de contact (3) disposé sur la carte de circuits imprimés (18), caractérisé en ce que le dit compartiment de maintien du bloc batterie d'alimentation (19) est délimité par une paroi du boîtier (11) pour maintenir un bloc batterie d'alimentation (37), le dit connecteur est un ressort de connexion (12) possédant un contact à ressort (12a) de type ressort à lame mobile sous l'effet de la force élastique du ressort, le dit ressort de connexion (12) comporte une borne ressort à lame (12b) possédant une partie protubérante recourbée formant le contact à ressort (12a) et possédant une embase s'engageant dans la dite borne mâle (14), la dite borne ressort à lame (12b) est maintenue par la dite nervure de montage (16).

2. Assemblage de connecteur selon la revendication 1, qui est caractérisé en ce que la dite borne ressort à lame (12b) repose directement sur la surface interne de la dite paroi et que la dite borne ressort à lame (12b) est en forme de V à sa partie protubérante formant le contact à ressort (12a).

3. Appareil électronique possédant un boîtier comportant un compartiment de maintien d'un bloc batterie d'alimentation (19), délimité par une paroi à l'arrière du dit boîtier (41b) pour maintenir un bloc batterie d'alimentation (37), une carte de circuits imprimés (18) portant sur sa face inférieure un bornier de contact (3) , et un ressort de connexion (12) pour établir un contact électrique avec le dit bornier de contact (18), caractérisé en ce qu'il comprend un assemblage de connecteur selon la revendication 1 ou la revendication 2, par lequel le contact à ressort (12a) formé à l'extrémité protubérante de la dite borne ressort à lame (12b) est en contact électrique permanent avec le bornier de contact (3) disposé sur la face inférieure de la dite carte de circuits imprimés (18).

4. Appareil électronique selon la revendication 3, qui est caractérisé en ce que le dit boîtier (41b) porte également un ressort de connexion (2) possédant un ressort de contact (4) de type plongeur pour établir le contact électrique avec le dit bornier de contact (3) disposé sur la dite carte de circuits imprimés (18), le dit ressort de contact (4) étant mobile latéralement sous l'effet de la force élastique du ressort pour être en contact avec le dit bornier de contact (3) disposé sur la carte de circuits imprimés (18).
